# EUROPEAN PATENT APPLICATION

(11) **EP 4 676 130 A1**
(43) Date of publication of application: **07.01.2026**
(21) Application number: 23942740.4
(22) Date of filing: 27.06.2023
(51) Int. Cl.: H04W 52/24

(54) **METHOD FOR WIRELESS COMMUNICATION, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN)
(74) Representative: Taor, Simon Edward William
(86) International application number: PCT/CN2023/102606
(87) International publication number: WO 2025/000215

(57) **Abstract**

Provided are a method for wireless communication, and a terminal device and a network device. The method includes: a terminal device determining a first transmission resource among one or more transmission resources according to first information, where the first information includes one or more pieces of the following information: energy storage related information of the terminal device, and coverage information of the terminal device. In the embodiments of the present application, energy storage related information and/or coverage information of a terminal device is taken into consideration when determining a transmission resource, which is conducive to the terminal device selecting a more suitable transmission resource.

## Description

### TECHNICAL FIELD

The present disclosure relates to the technical field of communications, and particularly to a method for wireless communication, a terminal device, and a network device.

### BACKGROUND

In wireless communication systems, a terminal device often needs to determine a transmission resource before communicating with a network device. Since the situations of different terminal devices are different, how to determine the appropriate transmission resource for the terminal device has always been a hot issue in the field of wireless communications.

### SUMMARY

The present disclosure provides a method for wireless communication, a terminal device and a network device. Various aspects of the present disclosure are described as follows.

In a first aspect, a method for wireless communication is provided. The method includes that: a terminal device determines, based on first information, a first transmission resource from one or more transmission resources. Herein, the first information includes one or more of the following: power storage related information of the terminal device; and coverage information of the terminal device.

In a second aspect, a method for wireless communication is provided. The method includes that: a network device transmits first configuration information. Herein, the first configuration information is used for indicating a mapping relationship between one or more transmission resources and first information. The first information includes one or more of the following: power storage related information of the terminal device; and coverage information of the terminal device.

In a third aspect, a terminal device is provided. The terminal device includes a determination module, and the determination module is configured to determine, based on first information, a first transmission resource from one or more transmission resources. Herein, the first information includes one or more of the following: power storage related information of the terminal device; and coverage information of the terminal device.

In a fourth aspect, a network device is provided. The network device includes a communication module, and the communication module is configured to transmit first configuration information. Herein, the first configuration information is used for indicating a mapping relationship between one or more transmission resources and first information. The first information includes one or more of the following: power storage related information of the terminal device; and coverage information of the terminal device.

In a fifth aspect, a terminal device is provided. The terminal device includes a transceiver, a memory and a processor. The memory is configured to store a program, and the processor is configured to call the program stored in the memory and control the transceiver to receive or transmit a signal, to cause the terminal device to perform the method of the first aspect.

In a sixth aspect, a network device is provided. The network device includes a transceiver, a memory and a processor. The memory is configured to store a program, and the processor is configured to call the program stored in the memory and control the transceiver to receive or transmit a signal, to cause the network device to perform the method of the second aspect.

In a seventh aspect, a device is provided. The device includes a processor, and the processor is configured to call a program from a memory, to cause the device to perform the method of the first aspect or second aspect.

In an eighth aspect, a chip is provided. The chip includes a processor, and processor is configured to call a program from a memory, to cause a device installed with the chip to perform the method of the first aspect or second aspect.

In a ninth aspect, a computer-readable storage medium is provided. The computer-readable storage medium has stored thereon a program, and the program causes a computer to perform the method of the first aspect or second aspect.

In a tenth aspect, a computer program product is provided. The computer program product includes a program, and the program causes a computer to perform the method of the first aspect or second aspect.

In an eleventh aspect, a computer program is provided. The computer program causes a computer to perform the method of the first aspect or second aspect.

In the embodiments of the present disclosure, when determining the transmission resource, the power storage related information and/or coverage information of the terminal device are considered, which can be beneficial for the terminal device to select the more suitable transmission resource.

### BRIEF DESCRIPTION OF THE DRAWINGS

FIG. 1 is a schematic diagram of a system architecture of a wireless communication system to which an embodiment of the present disclosure is applied.
FIG. 2 is a schematic diagram of a system architecture of a zero-power communication system.
FIG. 3 is a schematic diagram of a power harvesting in zero-power communication.
FIG. 4 is a schematic diagram of a back scattering communication in zero-power communication.
FIG. 5 is a schematic diagram of load modulation of a zero-power terminal.
FIG. 6 is a schematic flowchart of a method for wireless communication according to an embodiment of the present disclosure.
FIG. 7 is a schematic flowchart of a method for wireless communication according to another embodiment of the present disclosure.
FIG. 8 is a schematic structural diagram of a terminal device according to an embodiment of the present disclosure.
FIG. 9 is a schematic structural diagram of a network device according to an embodiment of the present disclosure.
FIG. 10 is a schematic diagram of a device according to an embodiment of the present disclosure.

### DETAILED DESCRIPTION

The technical solutions in the present disclosure are described below in conjunction with the accompanying drawings.

### Wireless communication system

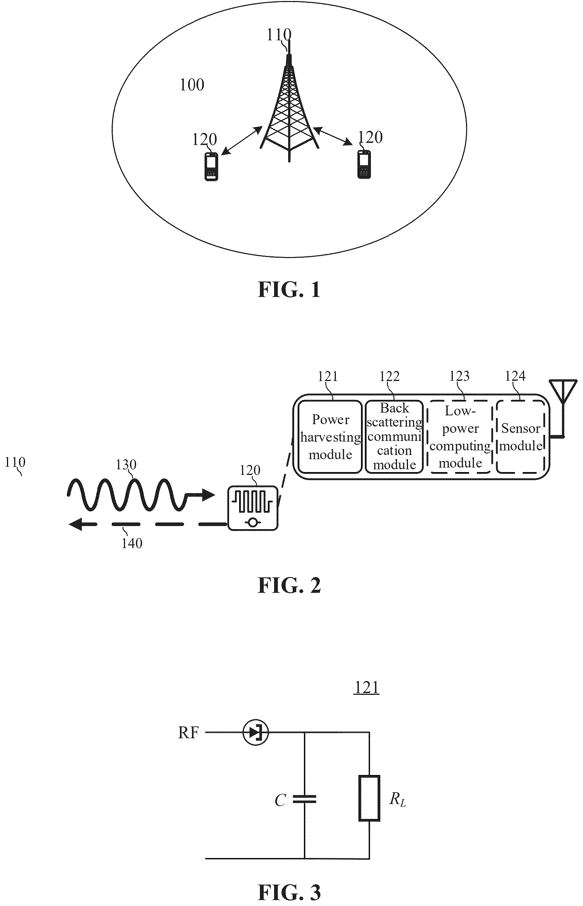

FIG. 1 is a schematic diagram of a system architecture of a wireless communication system 100 to which an embodiment of the present disclosure is applied. The wireless communication system 100 may include a network device 110 and a terminal device 120. The network device 110 may be a device in communication with the terminal device 120. The network device 110 may provide network coverage for a specific geographic area and may communicate with terminal device(s) 120 within the coverage. The terminal device 120 may access a network (e.g., a wireless network) through the network device 110. Optionally, the wireless communication system 100 may further include other network entities, such as a network controller and a mobility management entity, which are not limited in the embodiments of the present disclosure.

It should be understood that the technical solutions of the embodiments of the present disclosure can be applied to various communication systems, such as a 5th generation (5G) system or a new radio (NR) system, a long term evolution (LTE) system, an LTE frequency division duplex (FDD) system, an LTE time division duplex (TDD), and the like. The technical solutions provided in the present disclosure can also be applied to future communication systems, such as a 6th generation mobile communication system, a satellite communication system, and the like.

The terminal device in the embodiments of the present disclosure may also be referred to as user equipment (UE), an access terminal, a user unit, a user station, a mobile station (MS), a mobile terminal (MT), a remote station, a remote terminal, a mobile device, a user terminal, a terminal, a wireless communication device, a user agent or a user apparatus, and the like. The terminal device in the embodiments of the present disclosure may be a device that provides voice and/or data connectivity to a user, and may be used to connect people, objects, and machines. For example, the terminal device may be a handheld device having a wireless communication function, a vehicle-mounted device, and the like. The terminal device in the embodiments of the present disclosure may be a mobile phone, a tablet (or Pad), a notebook computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Optionally, the terminal device may be used to act as a base station. For example, the terminal device may act as a scheduling entity that provides sidelink signal(s) between terminal devices in vehicle-to-everything (V2X) or Device to Device (D2D), or the like. For example, a cellular phone and an automobile communicate with each other by using the sidelink signal(s). The cellular phone communicates with the device in smart home without relaying communication signal(s) through the base station.

The network device in the embodiments of the present disclosure may be a device for communicating with the terminal device. For example, the network device may be an access network device or a radio access network device, e.g., the network device may be a base station. The base station may broadly cover or be replaced with various names of a Node B (NodeB), an evolved NodeB (eNB), a next generation NodeB (gNB), a relay station, an access point, a transmitting and receiving point (TRP), a transmitting point (TP), a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a donor node, or the like, or a combination thereof.

Communication between the terminal devices may be performed through a sidelink. Sidelink communication may also be referred to as proximity services (ProSe) communication, unilateral communication, bylink communication or D2D communication.

### Zero-power communication

Zero-power communication is a kind of wireless communication technology. The zero-power communication can realize communication between the network device and the terminal device based on radio frequency power harvesting and back scattering communication technologies. Referring to FIG. 2, a zero-power communication network may include the network device 110 and the terminal device 120. In the zero-power communication network, the terminal device 120 may be referred to as a zero-power terminal. The network device 110 may be configured to transmit a wireless power supply signal/downlink communication signal 130 to the zero-power terminal 120, and may receive a back scattering signal 140 from the zero-power terminal 120. The zero-power terminal 120 may include a power harvesting module 121 and a back scattering communication module 122. Further, the zero-power terminal 120 may further include a low-power computing module 123 and/or one or more memories or sensor modules 124. The one or more memories or sensor modules 124 may be used to store some basic information (such as article identities, etc.) or to obtain sensing data such as the ambient temperature and the ambient humidity.

FIG. 3 illustrates one possible structure of the power harvesting module 121. As illustrated in FIG. 3, the power harvesting module 121 may harvest power from the spatial electromagnetic waves of a radio frequency signal based on the principle of electromagnetic induction, and further store the harvested power in a capacitor C. The above process may be understood as a charging process of the capacitor C. When the charging process of the capacitor C is completed, the capacitor C may start discharging to supply power to the zero-power terminal 120. For example, the discharge of the capacitor C may be used to drive the zero-power terminal 120 to perform low-power demodulation on data transmitted by the network device 110. For another example, the discharge of the capacitor C may be used to drive the zero-power terminal 120 to modulate data to be transmitted. For yet another example, the discharge of the capacitor C may be used to drive the sensor of the zero-power terminal 120 for data acquisition. For still another example, the discharge of the capacitor C may be used to drive the zero-power terminal 120 to read data in the memory, or the like.

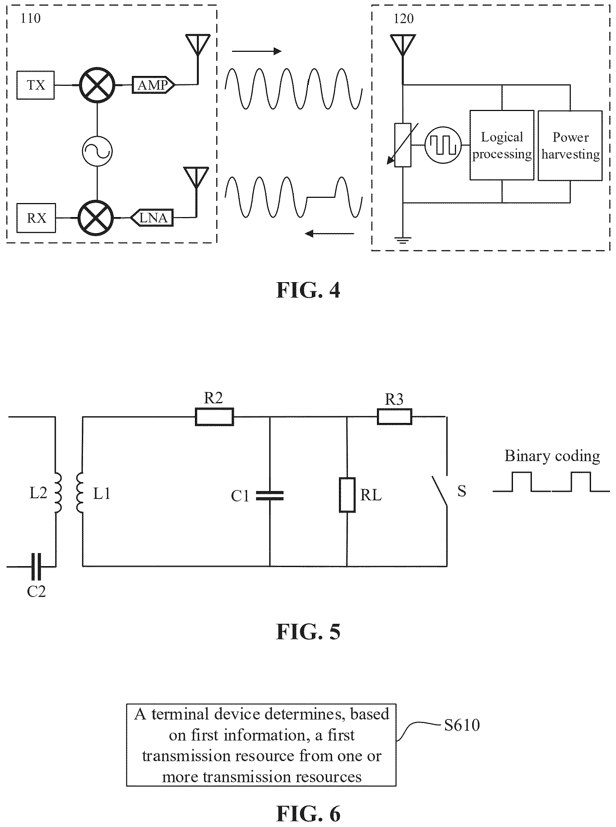

The aforementioned back scattering communication module 122 may be used for the zero-power terminal 120 to perform back scattering communication with the network device 110. The principle of back scattering communication is described below in conjunction with FIG. 4. Referring to FIG. 4, the zero-power terminal 120 receives the wireless signal 130 transmitted by the network device 110, and modulates the wireless signal 130 to load the data to be transmitted. Finally, the zero-power terminal 120 radiates the modulated signal 140 through the antenna. Such information transmission process is referred to as the back scattering communication. The above wireless signal 130 may also be referred to as a carrier signal. The carrier signal may refer to a wireless signal that has not been modulated. For example, the carrier signal may be a sine wave signal. Herein, the back scattering communication is closely related to the load modulation function. The load modulation function can be understood as: by adjusting and controlling, according to the beats of the data stream, circuit parameters of an oscillation loop of the zero-power terminal, the parameters, such as the magnitude of the impedance, of the zero-power terminal change accordingly, and thus the modulation procedure is completed.

In some implementations, other devices may also be provided on the transport (TX) path of the network device 110 for processing the signal to be transmitted, such as an amplifier (AMP) or the like. In addition, other devices may also be provided on the receive (RX) path of the network device 110 for processing the received signal, such as a low noise amplifier (LNA) or the like.

Generally, the load modulation function can be implemented by the following two methods: resistance load modulation and capacitance load modulation. FIG. 5 illustrates a circuit diagram of a zero-power terminal based on a resistance load modulation technique. It should be noted that, for implementing the load modulation, the circuit illustrated in FIG. 5 is in a manner similar to existing load modulation circuits. For brevity, the functions of resistors R2 and R3, capacitors C1 and C2, and inductors L1 and L2 depicted in FIG. 5 are not elaborated upon here.

In the resistance load modulation, a resistor RL may be connected in parallel to the load. A switch S may realize ON or OFF of the resistor RL based on control of a binary data stream. In such way, the on-off of the resistor RL causes the change of the circuit voltage, and the change of the circuit voltage can control the amplitude of the back scattering signal of the zero-power terminal, thereby realizing the modulation of the back scattering signal, i.e., amplitude-shift keying (ASK) modulation is performed on the back scattering signal.

Similarly, in the capacitance load modulation, frequency-shift keying (FSK) modulation may be implemented by controlling the on-off of the capacitor based on the binary data stream to change a resonant frequency of the circuit, thereby changing an operating frequency of the back scattering signal.

As described above, the zero-power terminal can perform information modulation on the incoming signal (i.e., the carrier signal) by way of the load modulation, thereby realizing the back scattering communication process. Therefore, the zero-power terminal in the back scattering communication typically have the following advantages.

Advantage 1: since the zero-power terminal is not required to actively transmit signal(s), complex radio frequency paths are not required to be constructed. For example, the devices such as a power amplifier (PA) and a radio frequency filter may not be provided in the radio frequency paths, which can reduce the cost and volume of the terminal device.

Advantage 2: since the zero-power terminal is not required to actively generate high-frequency signal(s), a high-frequency crystal oscillator is not required, which can reduce the cost and volume of the terminal device.

Advantage 3: since the zero-power terminal can communicate with the network device using the back scattering technology, the zero-power terminal consumes less power during communication, and even does not need to consume its own power.

In addition to the aforementioned functions of the back scattering communication, power harvesting and load modulation, the zero-power terminal may also have an coding function. The data transmitted by the encoding end (e.g., the zero-power terminal or an electronic tag) may use different forms of codes to represent binary "1" and "0". In the zero-power communication system, the commonly used coding methods may include: non return zero (NRZ) coding, Manchester coding, unipolar return zero (RZ) coding, differential binary phase (DBP) coding, Miller coding and differential coding, or the like. In layman's terms, the encoding process is to use different pulse signals to represent 0 and 1.

### Classification of zero-power terminal

The zero-power terminals may be divided into three categories based on the power storage capability and whether it has the capability to generate RF signal(s) for signal transmission. The first category may be referred to as Device A, the second category may be referred to as Device B, and the third category may be referred to as Device C.

The Device A does not have the power storage capability, does not have the functions of independent signal generation and signal amplification, and can only perform the signal transmission by relying on the back scattering communication.

The Device B may have the power storage capability, but cannot generate the signal(s) independently, and can only perform the signal transmission in the back scattering manner. The power stored by the Device B can be used to amplify the back scattering signal.

The Device C may have the power storage capability; in addition, the Device C can generate the signal(s) independently, that is, the Device C can actively transmit the signal(s).

### Coverage Level

In order to support coverage enhancement, the concept of coverage enhancement level (CE Level) is introduced in some communication systems, such as narrow band internet of things (NB-IoT) and enhanced machine-type communication (eMTC) systems. For example, for the NB-IoT, three levels of CE Levels 0, 1 and 2 are defined, which can resist signal attenuation of 144 dB, 154 dB and 164 dB, respectively. Among the above three levels, the CE Level 0 may be referred to as normal coverage, and the remaining CE Levels may be referred to as enhanced coverage. Based on the CE Level at which the NB-IoT terminal is located, the network device may select the corresponding number of signal repetitions. For the eMTC, four levels of CE Levels 0, 1, 2, and 3 are defined to respectively resist different degrees of signal attenuation. The concept of coverage level in eMTC is basically similar to that in NB-IoT, which will not be described in detail here.

### Determination for coverage level in random access procedure

During the random access initialization stage, the terminal device (e.g., an NB-IoT terminal or an eMTC terminal) may determine its corresponding initial coverage level. For example, the terminal device may consider itself to be at an initial coverage level indicated by the network device, when the current random access procedure is triggered by a physical downlink control channel order (PDCCH order), the PDCCH order indicates the initial coverage level, or for the NB-IoT terminal, the PDCCH order indicates an initial narrow physical random access channel (NPRACH) repetition numbers; or, the higher layer configures the initial coverage level. Otherwise, the terminal device may determine its own initial coverage level based on reference signal receiving power (RSRP) measurements. The manner for the terminal device to determine the initial coverage level based on the RSRP measurements may be performed according to the manner described below.

If the higher layer configures a RSRP threshold corresponding to the CE Level 3, the RSRP measured by the terminal device is lower than the RSRP threshold corresponding to the CE Level 3, and the terminal device supports the CE Level 3, then the terminal device may consider itself to be at the CE Level 3.

Otherwise, if the higher layer configures a RSRP threshold corresponding to the CE Level 2, the RSRP measured by the terminal device is lower than the RSRP threshold corresponding to the CE Level 2, and the terminal device supports the CE Level 2, then the terminal device may consider itself to be at the CE Level 2.

Otherwise, if the higher layer configures a RSRP threshold corresponding to the CE Level 1, the RSRP measured by the terminal device is lower than the RSRP threshold corresponding to the CE Level 1, and the terminal device supports the CE Level 1, then the terminal device may consider itself to be at the CE Level 1.

Otherwise, the terminal device may consider itself to be at the CE Level 0.

In wireless communication systems, the terminal device often needs to determine the transmission resource before communicating with the network device. Since the situations of different terminal devices are different, how to determine the appropriate transmission resource for the terminal device has always been a hot issue in the field of wireless communications. Taking the zero-power terminal as an example, the zero-power terminal usually obtains the power by harvesting the radio waves transmitted by the network device, or obtains energy (such as solar energy, etc.) through the surrounding environment. After obtaining the power, the zero-power terminal can drive itself to operate. Since different zero-power terminals may have different efficiencies and/or coverage conditions for power harvesting, the coverage supported by the power harvested by the zero-power terminals may also be different. In view of the above differences, how to determine the appropriate transmission resource for the terminal device is a problem that needs to be solved.

In view of the above problem, the embodiments of the present disclosure proposes a method for wireless communication (or may be referred to as a resource selection method), which can consider differences between the terminal devices when selecting the transmission resource(s), so as to select the more appropriate transmission resource(s) for the terminal device(s).

Hereinafter, the embodiments of the present disclosure are described in more detail with reference to FIG. 6.

Referring to FIG. 6, the method for wireless communication according to an embodiment of the present disclosure may include an operation S610, i.e., a terminal device determines, based on first information, a first transmission resource from one or more transmission resources.

In some embodiments, the one or more transmission resources may include one or more of the following: an uplink transmission resource; and a downlink transmission resource. Taking the uplink transmission resource as an example, the one or more transmission resources may include one or more of the following: an uplink access resource; and an uplink data transmission resource. For example, the uplink access resource may be a physical random access channel (PRACH) resource. For example, the uplink data transmission resource may be a physical uplink shared channel (PUSCH) resource.

In some embodiments, different transmission resources from the multiple transmission resources mentioned in the operation S610 may include different characteristics. The characteristics described herein may refer to a modulation and coding scheme (MCS) and/or a repetition. It should be understood that, in the embodiments of the present disclosure, the aforementioned repetition may refer to the number of signal/channel repetitions. Taking the transmission resource to be the PRACH resource as an example, the aforementioned repetition in the embodiments of the present disclosure may refer to the number of PRACH repetitions. Taking the transmission resource to be the PUSCH resource as an example, the aforementioned repetition in the embodiments of the present disclosure may refer to the number of PUSCH repetitions.

In some embodiments, the aforementioned multiple transmission resources in the operation S610 may correspond to multiple MCSs. That is, the multiple transmission resources may be transmission resources with different MCSs.

In some embodiments, the aforementioned multiple transmission resources in the operation S610 may be represented based on different MCSs.

In some embodiments, the aforementioned multiple transmission resources in the operation S610 may correspond to multiple repetitions. That is, the multiple transmission resources may be transmission resources with different repetitions.

In some embodiments, the aforementioned multiple transmission resources in the operation S610 may be represented based on different repetitions.

In some embodiments, the operation S610 may be replaced with that: the terminal device determines, based on the first information, one characteristic from the multiple characteristics of the transmission resources. For example, based on the first information, the terminal device may select one MCS from the multiple MCSs. For another example, based on the first information, the terminal device may select one repetition from the multiple repetitions.

In some embodiments, the first information may include (or be used to indicate, or be used to determine) the power storage related information of the terminal device. Since power storage related information of terminal devices may be different, the coverage supported by the terminal devices may also be different. Therefore, when selecting the transmission resource (or the characteristic of the transmission resource), considering the differences between the power storage related information of different terminal devices can be beneficial to improving the transmission success rate of the terminal device.

In some embodiments, the first information may include (or be used to indicate, or be used to determine) the power storage related information of the terminal device and the coverage information of the terminal device. Since power storage related information of terminal devices may be different, coverage supported by the terminal devices may also be different. Therefore, when selecting the transmission resource (or the characteristic of the transmission resource), considering the differences between the power storage related information of different terminal devices can be beneficial to improving the transmission success rate of the terminal device. Further, considering the coverage of the terminal device while considering the power storage related information can be beneficial for the terminal device to select the more appropriate transmission resource. For example, when the coverage of the terminal device is good, even if the terminal device currently stores a larger amount of power, the transmission resource with the lower number of repetitions may be selected. Therefore, on the one hand, the waste of resources can be avoided; and on the other hand, the extra power consumption caused by the excessive number of repetitions can be also avoided.

In some embodiments, the power storage related information of the terminal device may include (or be used to indicate, or be used to determine) one or more of the following: power storage information of the terminal device; and power information of the terminal device.

In some embodiments, the power storage information of the terminal device may include (or be used to indicate, or be used to determine) one or more of the following: a power storage capability of the terminal device; and power currently stored by the terminal device. For example, the power storage capability of the terminal device may indicate the maximum storage power supported by the terminal device. For example, the power currently stored by the terminal device may refer to the power stored by the terminal device through wireless RF powering manner and/or other powering manners (ambient powering such as solar power and/or wind power).

In some embodiments, the power information of the terminal device may include (or be used to indicate, or be used to determine) transmission power of the terminal device or back scattering power of the terminal device. For example, the power information of the terminal device may include (or be used to indicate, or be used to determine) one or more of the following: the maximum transmission power supported by the terminal device; transmission power currently available to the terminal device; the maximum back scattering power supported by the terminal device; and back scattering power currently available to the terminal device.

In some embodiments, the coverage information of the terminal device may be used to indicate coverage conditions or coverage situations of the terminal device, such as indicating signal quality of the terminal device in a serving cell. The coverage information of the terminal device may include one or more of the following: signal quality of the terminal device in a serving cell; and location information of the terminal device in the serving cell.

In some embodiments, the signal quality of the terminal device in the serving cell may include a Reference Signal Received Power (RSRP) measurement quantity of the terminal device in the serving cell; or, the signal quality of the terminal device in the serving cell may be represented by the RSRP measurement quantity of the terminal device in the serving cell.

In some embodiments, the location information of the terminal device in the serving cell may include (or be used to indicate, or be used to determine) a distance between the terminal device and a cell reference point of the serving cell. For example, the cell reference point may be the center of the cell or the edge of the cell.

In some embodiments, the location information of the terminal device in the serving cell may include (or be used to indicate, or be used to determine) a distance between the terminal device and a satellite. For example, if the terminal device is in a non-terrestrial network (NTN) cell, the location information of the terminal device in the serving cell may include the distance between the terminal device and the satellite; or, the location of the terminal device in the serving cell may be represented by the distance between the terminal device and the satellite.

In some embodiments, the operation S610 may be replaced with that: the terminal device determines, based on first configuration information, the first transmission resource from the one or more transmission resources.

In some embodiments, the operation S610 may be replaced with that: the terminal device determines, based on the first information and the first configuration information, the first transmission resource from the one or more transmission resources.

In some embodiments, the first configuration information may be used for the terminal device to determine the first transmission resource. For example, the first configuration information may be used for indicating (or used for determining) a mapping relationship between the one or more transmission resources and the first information.

Taking the first information to be the power storage related information of the terminal device as an example, the terminal device may select, based on the mapping relationship indicated by the first configuration information, the transmission resource corresponding to its own power storage related information for transmission. For example, the terminal device may select, based on the power that is currently stored, the PRACH resources with different repetitions. Exemplarily, the more power stored by the terminal device, the PRACH resource with the larger number of repetitions may be selected. For another example, the terminal device may select, based on the power storage capability of the terminal device, the PRACH resources with different repetitions. Exemplarily, the stronger the power storage capability of the terminal device, the PRACH resource with the larger number of repetitions may be selected.

For example, when the first information includes both the power storage related information and the coverage information of the terminal device, the terminal device may select, based on the mapping relationship indicated by the first configuration information, the transmission resource corresponding to its own power storage related information and coverage information for transmission. For example, the terminal device may select, based on the power that is currently stored and the RSRP measurement quantity, the PRACH resources with different repetitions. Exemplarily, the more power stored by the terminal device and the smaller the RSRP measurement value, the PRACH resource with the larger number of repetitions may be selected. For another example, the terminal device may select, based on the power storage capacity and the RSRP measurement quantity of the terminal device, the PRACH resources with different repetitions. Exemplarily, the stronger the power storage capability of the terminal device and the smaller the RSRP measurement value, the PRACH resource with the larger number of repetitions may be selected.

In some embodiments, the first configuration information may be used to indicate (or used to determine) a mapping relationship between characteristic(s) of the transmission resource and the first information. For example, the first configuration information may be used to indicate (or used to determine) a mapping relationship between one or more MCSs and the first information. For another example, the first configuration information may be used to indicate (or used to determine) a mapping relationship between one or more repetitions and the first information.

In some embodiments, the first configuration information may be used to indicate (or used to determine) a mapping relationship between multiple MCSs and multiple pieces of power storage related information of the terminal device (e.g., the power that is currently stored by the terminal device).

In some embodiments, the first configuration information may be used to indicate (or used to determine) a mapping relationship between multiple repetitions (e.g., the PRACH repetitions) and multiple pieces of power storage related information of the terminal device (e.g., the power that is currently stored by the terminal device).

In some embodiments, the first configuration information may be used to indicate (or used to determine) a mapping relationship between multiple repetitions (e.g., the PRACH repetitions) and multiple pieces of power storage related information of the terminal device (e.g., the power that is currently stored by the terminal device) as well as coverage information (e.g., the RSRP) of the terminal device.

In some embodiments, the first information may correspond to multiple value ranges. The first configuration information may be used for indicating a mapping relationship between the multiple value ranges and the multiple transmission resources. For example, the first information may be the power storage related information (e.g., the power that is currently stored by the terminal device), the power storage related information may correspond to the multiple value ranges, and each of the multiple value ranges may correspond to at least one transmission resource in the multiple transmission resources. Different value ranges among the multiple value ranges may correspond to the same transmission resource or may correspond to different transmission resources.

In some embodiments, a value of the first information (e.g., the power storage related information) may belong to a first value range among multiple value ranges. The first configuration information may be used to indicate a mapping relationship between multiple value ranges and multiple transmission resources, and the first transmission resource may be the transmission resource corresponding to the first value range.

For example, by defining one or more thresholds of the power storage related information, different value ranges of the power storage related information may be mapped to different transmission resources. Exemplarily, N (N being a positive integer) thresholds of W(1), W(2),..., W(N) of the power storage related information may be introduced, where W(n) > W(n+1) and n is any value from 1 to N. The N thresholds of the power storage related information may divide the values of the power storage related information into N+1 value ranges. The N+1 value ranges may respectively correspond to N+1 different transmission resources of R(1), R(2),..., R(N+1). When the power storage related information of the terminal device is greater than W(1), the terminal device may determine the first transmission resource as the transmission resource R(1). When the power storage related information of the terminal device is between W(n) and W(n+1), the terminal device may determine the first transmission resource as the transmission resource R(n+1). When the power storage related information of the terminal device is less than W(N), the terminal device may determine the first transmission resource as the transmission resource R(N+1).

In some embodiments, the first information may correspond to multiple value ranges. In the first configuration information, each of the multiple value ranges may correspond to one of multiple repetitions (or MCSs). For example, the first information may be the power storage related information (e.g., the power that is currently stored by the terminal device); the power storage related information may correspond to the multiple value ranges, and each of the multiple value ranges may correspond to one repetition (or MCS) of the multiple repetitions (or MCSs). Different value ranges among the multiple value ranges may correspond to the same repetition (or MCS), or may correspond to different repetitions (or MCSs).

In some embodiments, by defining one or more thresholds of the power storage related information, different value ranges of the power storage related information may be mapped to different transmission resources. For example, N (N being a positive integer) thresholds of W(1), W(2),..., W(N) of the power storage related information may be introduced, where W(n) > W(n+1) and n is any value from 1 to N. The N thresholds of the power storage related information may divide the values of the power storage related information into N+1 value ranges. The N+1 value ranges may respectively correspond to N+1 different repetitions of K(1), K(2),..., K(N+1). When the power storage related information of the terminal device is greater than W(1), the terminal device may determine the repetition as K(1). When the power storage related information of the terminal device is between W(n) and W(n+1), the terminal device may determine the repetition as K(n+1). When the power storage related information of the terminal device is less than W(N), the terminal device may determine the repetition as K(N+1).

In some embodiments, the first information may correspond to multiple value range combinations, and the first configuration information is used for indicating a mapping relationship between the multiple value range combinations and the multiple transmission resources. For example, the first information may include the power storage related information (e.g., the power that is currently stored by the terminal device) and the coverage information (e.g., the RSRP measurement quantity of the terminal device). Both of the power storage related information and the coverage information may correspond to multiple value ranges, and the aforementioned multiple value range combinations may be a combination of the multiple value ranges corresponding to the power storage related information and the multiple value ranges corresponding to the coverage information.

In some embodiments, the value of the first information may include multiple values (e.g., the value of the power storage related information and the value of the coverage information). The multiple values may belong to a first value range combination among the multiple value range combinations. The first configuration information may be used to indicate a mapping relationship between the first value range combination and the multiple transmission resources, and the first transmission resource may be the transmission resource corresponding to the first value range combination.

In some embodiments, by defining one or more thresholds of the power storage related information and one or more thresholds of the coverage information, different value ranges of the power storage related information and different value ranges of the coverage information may be mapped to different transmission resources.

For example, the network device may provide M (M being a positive integer) transmission resources of R(1), R(2),..., R(M). Further, N (N being a positive integer) thresholds of W(1), W(2),..., W(N) of the power storage related information may be introduced, and X (X being a positive integer) thresholds of P(1), P(2), ..., P(X) of the coverage information may be further introduced. The N thresholds of the power storage related information may divide the values of the power storage related information into N+1 value ranges. The X thresholds of the coverage information may divide the values of the coverage information into X+1 value ranges. For the N+1 value ranges of the power storage related information and the X+1 value ranges of the coverage information, the network device may map one or more value combinations of {a value range of the power storage related information, a value range of the coverage information} to one transmission resource. One-to-one mapping or many-to-one mapping may be adopted between the one or more value combinations of {the value range of the power storage related information, the value range of the coverage information} and the transmission resource.

For another example, the network device may provide M (M being a positive integer) transmission resources of R(1), R(2),..., R(M). Further, N (N being a positive integer) thresholds of W(1), W(2),..., W(N) of the power storage related information may be introduced. The N thresholds of the power storage related information may divide the values of the power storage related information into N+1 value ranges. For one of the N+1 value ranges, a mapping relationship between one or more value ranges of the coverage information and the transmission resource may be introduced individually. The value ranges of the coverage information in different value ranges among the N+1 value ranges may be the same, partially the same, or different.

In some embodiments, the first information may correspond to multiple value range combinations. In the first configuration information, each of the multiple value range combinations may correspond to one repetition (or MCS) of multiple repetitions (or MCSs). For example, the first information may include the power storage related information (e.g., the power that is currently stored by the terminal device) and the coverage information (e.g., the RSRP measurement quantity of the terminal device). Each of the power storage related information and the coverage information may correspond to multiple value ranges, and the aforementioned multiple value range combinations may be a combination of the multiple value ranges corresponding to the power storage related information and the multiple value ranges corresponding to the coverage information.

In some embodiments, by defining one or more thresholds of the power storage related information and one or more thresholds of the coverage information, different value ranges of the power storage related information and different value ranges of the coverage information may be mapped to different repetitions (or MCSs).

For example, the network device may provide M (M being a positive integer) transmission resources of R(1), R(2),..., R(M). Further, N (N being a positive integer) thresholds of W(1), W(2),..., W(N) of the power storage related information may be introduced, and X (X being a positive integer) thresholds of P(1), P(2), ..., P(X) of the coverage information may be further introduced. The N thresholds of the power storage related information may divide the values of the power storage related information into N+1 value ranges. The X thresholds of the coverage information may divide the values of the coverage information into X+1 value ranges. For the N+1 value ranges of the power storage related information and the X+1 value ranges of the coverage information, the network device may map one or more value combinations of {a value range of the power storage related information, a value range of the coverage information} to one repetition (or MCS). One-to-one mapping or many-to-one mapping may be adopted between the one or more value combinations of {the value range of the power storage related information, the value range of the coverage information} and the repetition (or the MCS).

For another example, the network device may provide M (M being a positive integer) transmission resources of R(1), R(2),..., R(M). Further, N (N being a positive integer) thresholds of W(1), W(2),..., W(N) of the power storage related information may be introduced. The N thresholds of the power storage related information may divide the values of the power storage related information into N+1 value ranges. For one of the N+1 value ranges, a mapping relationship between one or more value ranges of the coverage information and the repetition (or the MCS) may be introduced individually. The value ranges of the coverage information in different value ranges among the N+1 value ranges may be the same, partially the same, or different.

In the foregoing, the contents of the first configuration information have been described in detail in conjunction with various embodiments. Examples are provided hereafter for illustrating the configuration manners for the first configuration information.

In some embodiments, the first configuration information may be pre-configuration information. For example, the terminal device may store the first configuration information in a memory or a tag of the terminal device in advance.

In some embodiments, the first configuration information may be configuration information transmitted by the network device. For example, the network device may configure uplink transmission resource(s) for the terminal device(s); and configure, based on the first configuration information, different transmission resources for the terminal device(s) with different power storage related information. For another example, the network device may configure the uplink transmission resource(s) for the terminal device(s); and configure, based on the first configuration information, different transmission resources for the terminal device(s) with different power storage related information and different coverage information.

In some embodiments, the network device may transmit the first configuration information to the terminal device through a system message. That is, the first configuration information may be carried in the system message. For example, the system message may be a system information block (SIB) message or a master information block (MIB) message. Taking the SIB message as an example, the system message may be a SIB1 message or another SIB message.

In some embodiments, the network device may transmit the first configuration information through radio resource control (RRC) signaling. That is, the first configuration information may be carried in the RRC signaling. For example, the RRC signaling may be RRC-specific signaling.

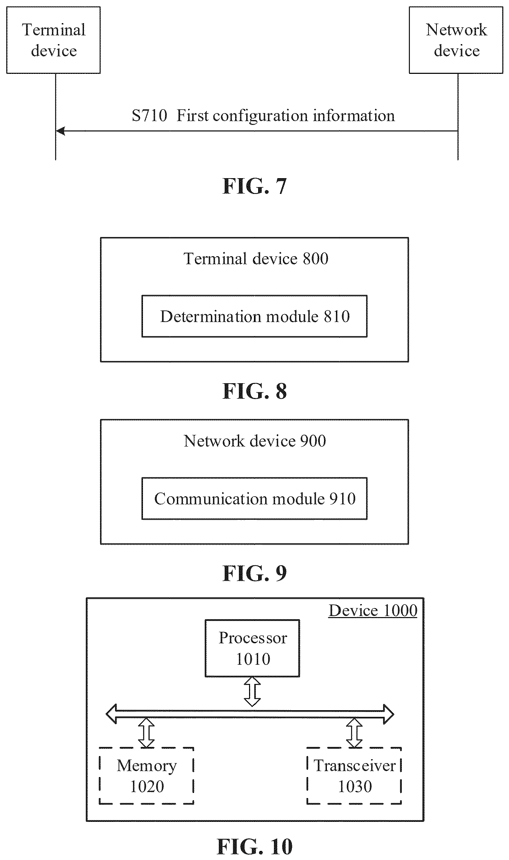

Taking the first configuration information to be the configuration information transmitted by the network device as an example, referring to FIG. 7, the embodiments of the present disclosure further provide a method for wireless communication (or a method for resource configuration). The method includes an operation S710, i.e., the network device transmits the first configuration information to the terminal device. Here, the first configuration information may be transmitted in a broadcast manner or may be directly transmitted to the terminal device. In some embodiments, after receiving the first configuration information, the terminal device may continue to perform the aforementioned operation S610.

In some embodiments, after selecting the first transmission resource, the terminal device may perform, based on the first transmission resource, the transmission with the network device. Taking the first transmission resource to be the PRACH resource with the repetition of K as an example, the terminal device may access the network device based on the PRACH resource with the repetition of K.

In some embodiments, the terminal device described in the embodiments of the present disclosure may refer to a zero-power terminal. The zero-power terminal may be one of the aforementioned Device A, Device B, or Device C in the section "Classification of zero-power terminal". For example, the zero-power terminal may not have the power storage capability, not have the functions of independent signal generation and signal amplification, and can only perform the signal transmission by relying on the back scattering communication. For another example, the zero-power terminal may have the power storage capability, but cannot generate the signal(s) independently, and can only perform the signal transmission in the back scattering manner. The power stored by the zero-power terminal may be used to amplify the back scattering signal. For another example, the zero-power terminal may generate the signal(s) independently, that is, the zero-power terminal may actively transmit the signal(s). As an example, the zero-power terminal may be a Radio Frequency Identification (RFID) tag. Accordingly, the network device may be an RFID reader.

Hereinafter, the embodiments of the present disclosure are described in more detail in conjunction with specific examples. In the following examples, the aforementioned terminal device may be the zero-power terminal, the first configuration information may be the configuration information transmitted by the network device, and the transmission resources may be the PRACH resources with different repetitions. It should be understood that the following examples are merely to help those skilled in the art understand the embodiments of the present disclosure, and are not intended to limit the embodiments of the present disclosure to the specific numerical values or specific scenarios as illustrated. It is apparent to those skilled in the art that various equivalent modifications or variations can be made based on the following examples, and such modifications or variations shall also fall within the scope of the embodiments of the present disclosure.

### Example 1: the first information is the power related information of the zero-power terminal

For the zero-power terminals with different power storage related information, the network device may configure the PRACH resources with different repetitions. Then, the network device may notify, through the first configuration information, the zero-power terminal of the mapping relationship between its power storage related information and the repetitions of the PRACH resources. After receiving the first configuration information, the zero-power terminal may select, based on its own power storage related information, the corresponding PRACH resource for transmission. For example, the zero-power terminal may select, based on the power that is currently stored, the PRACH resource with the corresponding repetition. Exemplarily, the more power stored by the zero-power terminal, the PRACH resource with the larger repetition may be selected by the zero-power terminal device. For another example, the zero-power terminal may select, based on the power storage capability of the zero-power terminal, the PRACH resource with the corresponding repetition. Exemplarily, the stronger the power storage capability of the zero-power terminal, the PRACH resource with the larger repetition may be selected by the zero-power terminal device.

The coverage that is supportable by the zero-power terminals with different power storage may be different. For example, the less power stored by the zero-power terminal, the lower the PRACH repetition supported by the zero-power terminal may be. Otherwise, the power stored by the zero-power terminal may be depleted by the larger repetition. When configuring the PRACH resource(s), the network device may consider the difference in the power storage of different zero-power terminals. As such, the network device can be enabled to more flexibly support the access of the zero-power terminals with different power storage capabilities, which can be beneficial to improving the possibility of the zero-power terminals with different power storage capabilities to access the network for data transmission.

### Example 2: the first information includes the power related information and the coverage information of the zero-power terminal

For the zero-power terminals with different power storage related information and different coverage information, the network device may configure the PRACH resources with different repetitions. Then, the network device may notify, through the first configuration information, the zero-power terminal of the mapping relationship between the power storage related information as well as the coverage information and the repetitions of the PRACH resources. After receiving the first configuration information, the zero-power terminal may select, based on its own power storage related information and coverage information (e.g., the RSRP measurement quantity), the PRACH resource with the corresponding repetition. For example, the more power stored by the zero-power terminal and the smaller the RSRP measurement value, the PRACH resource with the larger repetition may be selected. For another example, the stronger the power storage capability of the zero-power terminal and the smaller the RSRP measurement value, the PRACH resource with the larger repetition may be selected.

The coverage that is supportable by the zero-power terminals with different power storage may be different. For example, the less power stored by the zero-power terminal, the lower the PRACH repetition supported by the zero-power terminal may be. Otherwise, the power stored by the zero-power terminal may be depleted by the larger repetition. When configuring the PRACH resource(s), the network device may consider the difference in the power storage of different zero-power terminals. As such, the network device can be enabled to more flexibly support the access of the zero-power terminals with different power storage capabilities, which can be beneficial to improving the possibility of the zero-power terminals with different power storage capabilities to access the network for data transmission. In addition, by considering the network coverage situation of the zero-power terminal while considering the power storage related information, on the one hand, the waste of transmission resources can be avoided; and on the other hand, the extra power consumption caused by the excessive number of repetitions can be also avoided. For example, when the coverage situation of the terminal device is good, even if the terminal device currently stores the larger amount of power, the transmission resource with the lower number of repetitions may be selected. Therefore, on the one hand, the waste of resources can be avoided; and on the other hand, the extra power consumption caused by the excessive number of repetitions can be also avoided.

The method embodiments of the present disclosure are described above in detail in conjunction with FIGS. 1 to 7. Hereinafter, the apparatus embodiments of the present disclosure may be described in detail in conjunction with FIGS. 8 to 10. It should be understood that the description of the method embodiments and the description of the apparatus embodiments correspond to each other, thus the portions not described in detail can be referred to the foregoing method embodiments.

FIG. 8 is a schematic structural diagram of a terminal device according to an embodiment of the present disclosure. The terminal device 800 illustrated in FIG. 8 may include a determination module 810. The determination module 810 is configured to determine, based on first information, a first transmission resource from one or more transmission resources. The first information includes one or more of the following: power storage related information of the terminal device; and coverage information of the terminal device.

In some embodiments, the power storage related information may include one or more of the following: power storage information of the terminal device; and power information of the terminal device.

In some embodiments, the power storage information may include one or more of the following: a power storage capability of the terminal device; and power currently stored by the terminal device.

In some embodiments, the power information may include one or more of the following: maximum transmission power supported by the terminal device; transmission power currently available to the terminal device; maximum back scattering power supported by the terminal device; and back scattering power currently available to the terminal device.

In some embodiments, the coverage information may include one or more of the following: signal quality of the terminal device in a serving cell; and location information of the terminal device in the serving cell.

In some embodiments, the signal quality of the terminal device in the serving cell may include a reference signal received power (RSRP) measurement quantity of the terminal device in the serving cell; and/or, the location information of the terminal device in the serving cell may include a distance between the terminal device and a cell reference point of the serving cell or a satellite.

In some embodiments, modulation and coding schemes (MCSs) and/or repetitions corresponding to a plurality of transmission resources may be different; or, the plurality of transmission resources may be represented based on different MCSs and/or repetitions.

In some embodiments, the first transmission resource may be determined based on the first information and first configuration information, and the first configuration information may be used for indicating a mapping relationship between the one or more transmission resources and the first information.

In some embodiments, the first information may correspond to a plurality of value ranges, and the first configuration information may be used for indicating a mapping relationship between the plurality of value ranges and a plurality of transmission resources. Alternatively, the first information may correspond to a plurality of value range combinations, and the first configuration information may be used for indicating a mapping relationship between the plurality of value range combinations and the plurality of transmission resources.

In some embodiments, the first information may be the power storage related information, and the plurality of value ranges may be a plurality of value ranges corresponding to the power storage related information.

In some embodiments, the first information may include the power storage related information and the coverage information, each of the power storage related information and the coverage information may correspond to a plurality of value ranges, and the plurality of value range combinations may be combinations of the plurality of value ranges corresponding to the power storage related information and the plurality of value ranges corresponding to the coverage information.

In some embodiments, a value of the first information may belong to a first value range among a plurality of value ranges, the first configuration information may be used for indicating a mapping relationship between the plurality of value ranges and a plurality of transmission resources, and the first transmission resource may be a transmission resource corresponding to the first value range. Alternatively, a value of the first information may include a plurality of values, the plurality of values may belong to a first value range combination among a plurality of value range combinations, the first configuration information may be used for indicating a mapping relationship between the first value range combination and the plurality of transmission resources, and the first transmission resource may be a transmission resource corresponding to the first value range combination.

In some embodiments, the value of the first information may be a value of the power storage related information. Alternatively, the plurality of values included in the first information may be a value of the power storage related information and a value of the coverage information.

In some embodiments, the first configuration information may be configuration information from a network device or pre-configuration information.

In some embodiments, the first configuration information may be the configuration information from the network device, and the first configuration information may be carried in a system message or radio resource control (RRC) signaling.

In some embodiments, the one or more transmission resources may include one or more of the following: an uplink access resource; and an uplink data transmission resource.

In some embodiments, the terminal device may be a zero-power terminal.

FIG. 9 is a schematic structural diagram of a network device according to an embodiment of the present disclosure. The network device 900 illustrated in FIG. 9 may include a communication module 910. The communication module 910 is configured to transmit first configuration information. The first configuration information is used for indicating a mapping relationship between one or more transmission resources and first information. The first information includes one or more of the following: power storage related information of a terminal device; and coverage information of the terminal device.

In some embodiments, the power storage related information may include one or more of the following: power storage information of the terminal device; and power information of the terminal device.

In some embodiments, the power storage information may include one or more of the following: a power storage capability of the terminal device; and power currently stored by the terminal device.

In some embodiments, the power information may include one or more of the following: maximum transmission power supported by the terminal device; transmission power currently available to the terminal device; maximum back scattering power supported by the terminal device; and back scattering power currently available to the terminal device.

In some embodiments, the coverage information may include one or more of the following: signal quality of the terminal device in a serving cell; and location information of the terminal device in the serving cell.

In some embodiments, the signal quality of the terminal device in the serving cell may include a reference signal received power (RSRP) measurement quantity of the terminal device in the serving cell; and/or, the location information of the terminal device in the serving cell may include a distance between the terminal device and a cell reference point of the serving cell or a satellite.

In some embodiments, modulation and coding schemes (MCSs) and/or repetitions corresponding to a plurality of transmission resources may be different; or, the plurality of transmission resources may be represented based on different MCSs and/or repetitions.

In some embodiments, the first transmission resource may be determined based on the first information and first configuration information, and the first configuration information may be used for indicating a mapping relationship between the one or more transmission resources and the first information.

In some embodiments, the first information may correspond to a plurality of value ranges, and the first configuration information may be used for indicating a mapping relationship between the plurality of value ranges and a plurality of transmission resources. Alternatively, the first information may correspond to a plurality of value range combinations, and the first configuration information may be used for indicating a mapping relationship between the plurality of value range combinations and the plurality of transmission resources.

In some embodiments, the first information may be the power storage related information, and the plurality of value ranges may be a plurality of value ranges corresponding to the power storage related information.

In some embodiments, the first information may include the power storage related information and the coverage information, each of the power storage related information and the coverage information may correspond to a plurality of value ranges, and the plurality of value range combinations may be combinations of the plurality of value ranges corresponding to the power storage related information and the plurality of value ranges corresponding to the coverage information.

In some embodiments, a value of the first information may belong to a first value range among a plurality of value ranges, the first configuration information may be used for indicating a mapping relationship between the plurality of value ranges and a plurality of transmission resources, and the first transmission resource may be a transmission resource corresponding to the first value range. Alternatively, a value of the first information may include a plurality of values, the plurality of values may belong to a first value range combination among a plurality of value range combinations, the first configuration information may be used for indicating a mapping relationship between the first value range combination and the plurality of transmission resources, and the first transmission resource may be a transmission resource corresponding to the first value range combination.

In some embodiments, the value of the first information may be a value of the power storage related information. Alternatively, the plurality of values included in the first information may be a value of the power storage related information and a value of the coverage information.

In some embodiments, the first configuration information may be configuration information from a network device or pre-configuration information.

In some embodiments, the first configuration information may be the configuration information from the network device, and the first configuration information may be carried in a system message or radio resource control (RRC) signaling.

In some embodiments, the one or more transmission resources may include one or more of the following: an uplink access resource; and an uplink data transmission resource.

In some embodiments, the terminal device may be a zero-power terminal.

FIG. 10 is a schematic structural diagram of a communication device according to an embodiment of the present disclosure. The dashed line in FIG. 10 indicates that the unit or module is optional. The device 1000 may be used to implement each of the methods described in the aforementioned method embodiments. The device 1000 may be a chip, a terminal device, or a network device.

The device 1000 may include one or more processors 1010. The processor 1010 may support the device 1000 to implement each of the methods described in the aforementioned method embodiments. The processor 1010 may be a general purpose processor or a special purpose processor. For example, the processor may be a central processing unit (CPU). Alternatively, the processor may also be another general purpose processor, a digital signal processor (DSP), an application specific integrated circuit (ASIC), a field programmable gate array (FPGA) or another programmable logic device, a discrete gates or transistor logic device, a discrete hardware component, or the like. The general purpose processor may be a microprocessor or the processor may be any conventional processor or the like.

The device 1000 may further include one or more memories 1020. The memory 1020 has stored a program that when executed by the processor 1010, to cause the processor 1010 to perform each of the methods described in the aforementioned method embodiments. The memory 1020 may be independent of the processor 1010 or may be integrated in the processor 1010.

The device 1000 may further include a transceiver 1030. The processor 1010 may communicate with other devices or chips through the transceiver 1030. For example, through the transceiver 1030, the processor 1010 may transmit data to other devices or chips, and receive data from other devices or chips.

An embodiment of the present disclosure further provides a computer-readable storage medium for storing a program. The computer-readable storage medium can be applied to the terminal device or the network device provided in the embodiments of the present disclosure, and the program causes a computer to perform each of the methods performed by the terminal device or the network device in various embodiments of the present disclosure.

An embodiment of the present disclosure further provides a computer program product. The computer program product includes programs. The computer program product may be applied to the terminal device or the network device provided in the embodiments of the present disclosure, and the programs cause a computer to perform each of the methods performed by the terminal device or the network device in various embodiments of the present disclosure.

An embodiment of the present disclosure further provides a computer program. The computer program may be applied to the terminal device or the network device provided in the embodiments of the present disclosure, and the computer program causes a computer to perform each of the methods performed by the terminal device or the network device in various embodiments of the present disclosure.

It is understood that the terms "system" and "network" may be used interchangeably in the present disclosure. In addition, the terms used in the embodiments of the present disclosure are used merely for explanation of specific embodiments of the present disclosure, and such terms are not intended to limit the present disclosure. The terms "first", "second", "third" and "fourth" or the like in the description, claims and the accompanying drawings of the present disclosure are used to distinguish different objects, and are not used to describe a specific order. Furthermore, the terms "including" and "having" and any variations thereof are intended to cover non-exclusive inclusions.

In the embodiments of the present disclosure, the reference to "indication/indicate/indicating" may be a direct indication, may be an indirect indication, or may be indicative of an association relationship. For example, A indicates B, which may represent that A directly indicates B, e.g., B may be obtained by A; which may also represent that A indirectly indicates B, e.g., A indicates C, and B may be obtained by C; or which may further represent that an association relationship exists between A and B.

In the embodiments of the present disclosure, the expression "B corresponding to A" means that B is associated with A, and B may be determined based on A. However, it should also be understood that "determining B based on A" does not mean that B is determined based on A alone, and that B may also be determined based on A and/or other information.

In the embodiments of the present disclosure, the reference to "corresponding/correspondence/correspond" may indicate that there are direct or indirect correspondences between two objects, or may indicate that there is an association relationship between the two objects, or may be a relationship between indication and being indicated, configuration and being configured, and the like.

In the embodiments of the present disclosure, the term "predefined/predefinition", or "preconfigured/pre-configuration" may be implemented by pre-storing corresponding codes or tables, or by other means that may be used to indicate relevant information in devices (e.g., including terminal devices and network devices), and the specific implementations of which are not limited herein. For example, the "predefined" may refer to what is defined in protocol.

In the embodiments of the present disclosure, the "protocol" may refer to a standard protocol in the communication field, and may include, for example, an LTE protocol, an NR protocol and related protocols applied in future communication systems, which are not limited in the present disclosure.

In the embodiments of the present disclosure, the term "and/or" only indicates an association relationship for describing associated objects and represents that there are three relationships. For example, A and/or B may represent three cases: i.e., independent existence of A, existence of both A and B and independent existence of B. In addition, the character "/" in the present disclosure typically represents that previous and next associated objects form an "or" relationship.

In various embodiments of the present disclosure, the size of the sequence number(s) of the above-mentioned processes does not imply the sequence(s) of execution. The sequence of execution of each process should be determined according to the functions and internal logic thereof, and should not constitute any limitation on the implementation processes of the embodiments of the present disclosure.

In the several embodiments provided in the present disclosure, it is to be understood that the disclosed system, devices, and methods may be implemented in other manners. For example, the device embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, that is, may be located in one place or may be distributed over multiple network units. Some or all of the units may be selected according to actual needs, to achieve the objectives of the schemes of the embodiments of the present disclosure.

In addition, functional units in various embodiments of the present disclosure may be integrated into one processing unit, or each of the units may be physically separated, or two or more units may be integrated into one unit.

The aforementioned embodiments may be implemented in whole or in part by software, hardware, firmware or any combination thereof. When implemented in software, the aforementioned embodiments may be implemented in whole or in part in the form of a computer program product. The computer program product includes one or more computer instructions. When the computer program instructions are loaded and executed on a computer, the flows or functions may be generated in whole or in part according to the embodiments of the present disclosure. The computer may be a general purpose computer, a dedicated computer, a computer network, or other programmable devices. The computer instructions may be stored in a computer-readable storage medium or transmitted from one computer-readable storage medium to another computer-readable storage medium. For example, the computer instructions may be transmitted from one Web site, computer, server, or data center to another Web site, computer, server, or data center in a wired (e.g., coaxial cable, optical fiber, digital subscriber line (DSL)) manner or a wireless (e.g., infrared, wireless, microwave, etc.) manner. The computer-readable storage medium may be any available medium that a computer may access, or may be a data storage device that is integrated with one or more available media, such as a server, a data center, or the like. The available medium may be a magnetic medium (e.g., floppy disk, hard disk, magnetic tape), an optical medium (e.g., digital video disc (DVD)), or a semiconductor medium (e.g., solid state disk (SSD)), etc.

The foregoing descriptions are merely specific implementations of the present disclosure, but are not intended to limit the scope of protection of the present disclosure. Any variation or replacement readily figured out by those skilled in the art within the technical scope disclosed in the present disclosure shall fall within the scope of protection of the present disclosure. Therefore, the scope of protection of the present disclosure shall be subject to the scope of protection of the claims.

## Claims

1. A method for wireless communication, comprising:
determining, by a terminal device based on first information, a first transmission resource from one or more transmission resources;
wherein the first information comprises one or more of the following:
power storage related information of the terminal device; and
coverage information of the terminal device.

2. The method of claim 1, wherein the power storage related information comprises one or more of the following:
power storage information of the terminal device; and
power information of the terminal device.

3. The method of claim 2, wherein the power storage information comprises one or more of the following:
a power storage capability of the terminal device; and
power currently stored by the terminal device.

4. The method of claim 2 or 3, wherein the power information comprises one or more of the following:
maximum transmission power supported by the terminal device;
transmission power currently available to the terminal device;
maximum back scattering power supported by the terminal device; and
back scattering power currently available to the terminal device.

5. The method of any one of claims 1 to 4, wherein the coverage information comprises one or more of the following:
signal quality of the terminal device in a serving cell; and
location information of the terminal device in the serving cell.

6. The method of claim 5, wherein
the signal quality of the terminal device in the serving cell comprises a Reference Signal Received Power (RSRP) measurement quantity of the terminal device in the serving cell; and/or
the location information of the terminal device in the serving cell comprises a distance between the terminal device and a cell reference point of the serving cell or a satellite.

7. The method of any one of claims 1 to 6, wherein
Modulation and Coding Schemes (MCSs) and/or repetitions corresponding to a plurality of transmission resources are different; or
the plurality of transmission resources are represented based on different MCSs and/or repetitions.

8. The method of any one of claims 1 to 7, wherein the first transmission resource is determined based on the first information and first configuration information, and the first configuration information is used for indicating a mapping relationship between the one or more transmission resources and the first information.

9. The method of claim 8, wherein
the first information corresponds to a plurality of value ranges, and the first configuration information is used for indicating a mapping relationship between the plurality of value ranges and a plurality of transmission resources; or
the first information corresponds to a plurality of value range combinations, and the first configuration information is used for indicating a mapping relationship between the plurality of value range combinations and the plurality of transmission resources.

10. The method of claim 9, wherein the first information is the power storage related information, and the plurality of value ranges are a plurality of value ranges corresponding to the power storage related information.

11. The method of claim 9, wherein the first information comprises the power storage related information and the coverage information, each of the power storage related information and the coverage information corresponds to a plurality of value ranges, and the plurality of value range combinations are combinations of the plurality of value ranges corresponding to the power storage related information and the plurality of value ranges corresponding to the coverage information.

12. The method of claim 8, wherein a value of the first information belongs to a first value range among a plurality of value ranges, the first configuration information is used for indicating a mapping relationship between the plurality of value ranges and a plurality of transmission resources, and the first transmission resource is a transmission resource corresponding to the first value range; or
a value of the first information comprises a plurality of values, the plurality of values belong to a first value range combination among a plurality of value range combinations, the first configuration information is used for indicating a mapping relationship between the first value range combination and the plurality of transmission resources, and the first transmission resource is a transmission resource corresponding to the first value range combination.

13. The method of claim 12, wherein
the value of the first information is a value of the power storage related information; or
the plurality of values comprised in the first information are a value of the power storage related information and a value of the coverage information.

14. The method of any one of claims 8 to 13, wherein the first configuration information is configuration information from a network device or pre-configuration information.

15. The method of claim 14, wherein the first configuration information is the configuration information from the network device, and the first configuration information is carried in a system message or Radio Resource Control (RRC) signaling.

16. The method of any one of claims 1 to 15, wherein the one or more transmission resources comprise one or more of the following:
an uplink access resource; and
an uplink data transmission resource.

17. The method of any one of claims 1 to 16, wherein the terminal device is a zero-power terminal.

18. A method for wireless communication, comprising:
transmitting, by a network device, first configuration information;
wherein the first configuration information is used for indicating a mapping relationship between one or more transmission resources and first information; and
wherein the first information comprises one or more of the following:
power storage related information of a terminal device; and
coverage information of the terminal device.

19. The method of claim 18, wherein the power storage related information comprises one or more of the following:
power storage information of the terminal device; and
power information of the terminal device.

20. The method of claim 19, wherein the power storage information comprises one or more of the following:
a power storage capability of the terminal device; and
power currently stored by the terminal device.

21. The method of claim 19 or 20, wherein the power information comprises one or more of the following:
maximum transmission power supported by the terminal device;
transmission power currently available to the terminal device;
maximum back scattering power supported by the terminal device; and
back scattering power currently available to the terminal device.

22. The method of any one of claims 18 to 21, wherein the coverage information comprises one or more of the following:
signal quality of the terminal device in a serving cell; and
location information of the terminal device in the serving cell.

23. The method of claim 22, wherein
the signal quality of the terminal device in the serving cell comprises a Reference Signal Received Power (RSRP) measurement quantity of the terminal device in the serving cell; and/or
the location information of the terminal device in the serving cell comprises a distance between the terminal device and a cell reference point of the serving cell or a satellite.

24. The method of any one of claims 18 to 23, wherein
Modulation and Coding Schemes (MCSs) and/or repetitions corresponding to a plurality of transmission resources are different; or
the plurality of transmission resources are represented based on different MCSs and/or repetitions.

25. The method of any one of claims 18 to 24, wherein the first transmission resource is determined based on the first information and first configuration information, and the first configuration information is used for indicating a mapping relationship between the one or more transmission resources and the first information.

26. The method of claim 25, wherein
the first information corresponds to a plurality of value ranges, and the first configuration information is used for indicating a mapping relationship between the plurality of value ranges and a plurality of transmission resources; or
the first information corresponds to a plurality of value range combinations, and the first configuration information is used for indicating a mapping relationship between the plurality of value range combinations and the plurality of transmission resources.

27. The method of claim 26, wherein the first information is the power storage related information, and the plurality of value ranges are a plurality of value ranges corresponding to the power storage related information.

28. The method of claim 26, wherein the first information comprises the power storage related information and the coverage information, each of the power storage related information and the coverage information corresponds to a plurality of value ranges, and the plurality of value range combinations are combinations of the plurality of value ranges corresponding to the power storage related information and the plurality of value ranges corresponding to the coverage information.

29. The method of claim 25, wherein a value of the first information belongs to a first value range among a plurality of value ranges, the first configuration information is used for indicating a mapping relationship between the plurality of value ranges and a plurality of transmission resources, and the first transmission resource is a transmission resource corresponding to the first value range; or
a value of the first information comprises a plurality of values, the plurality of values belong to a first value range combination among a plurality of value range combinations, the first configuration information is used for indicating a mapping relationship between the first value range combination and the plurality of transmission resources, and the first transmission resource is a transmission resource corresponding to the first value range combination.

30. The method of claim 29, wherein
the value of the first information is a value of the power storage related information; or
the plurality of values comprised in the first information are a value of the power storage related information and a value of the coverage information.

31. The method of any one of claims 25 to 30, wherein the first configuration information is configuration information from a network device or pre-configuration information.

32. The method of claim 31, wherein the first configuration information is the configuration information from the network device, and the first configuration information is carried in a system message or Radio Resource Control (RRC) signaling.

33. The method of any one of claims 18 to 32, wherein the one or more transmission resources comprise one or more of the following:
an uplink access resource; and
an uplink data transmission resource.

34. The method of any one of claims 18 to 33, wherein the terminal device is a zero-power terminal.

35. A terminal device, comprising:
a determination module, configured to determine, based on first information, a first transmission resource from one or more transmission resources;
wherein the first information comprises one or more of the following:
power storage related information of the terminal device; and
coverage information of the terminal device.

36. The terminal device of claim 35, wherein the power storage related information comprises one or more of the following:
power storage information of the terminal device; and
power information of the terminal device.

37. The terminal device of claim 36, wherein the power storage information comprises one or more of the following:
a power storage capability of the terminal device; and
power currently stored by the terminal device.

38. The terminal device of claim 36 or 37, wherein the power information comprises one or more of the following:
maximum transmission power supported by the terminal device;
transmission power currently available to the terminal device;
maximum back scattering power supported by the terminal device; and
back scattering power currently available to the terminal device.

39. The terminal device of any one of claims 35 to 38, wherein the coverage information comprises one or more of the following:
signal quality of the terminal device in a serving cell; and
location information of the terminal device in the serving cell.

40. The terminal device of claim 39, wherein
the signal quality of the terminal device in the serving cell comprises a Reference Signal Received Power (RSRP) measurement quantity of the terminal device in the serving cell; and/or
the location information of the terminal device in the serving cell comprises a distance between the terminal device and a cell reference point of the serving cell or a satellite.

41. The terminal device of any one of claims 35 to 40, wherein
Modulation and Coding Schemes (MCSs) and/or repetitions corresponding to a plurality of transmission resources are different; or
the plurality of transmission resources are represented based on different MCSs and/or repetitions.

42. The terminal device of any one of claims 35 to 41, wherein the first transmission resource is determined based on the first information and first configuration information, and the first configuration information is used for indicating a mapping relationship between the one or more transmission resources and the first information.

43. The terminal device of claim 42, wherein
the first information corresponds to a plurality of value ranges, and the first configuration information is used for indicating a mapping relationship between the plurality of value ranges and a plurality of transmission resources; or
the first information corresponds to a plurality of value range combinations, and the first configuration information is used for indicating a mapping relationship between the plurality of value range combinations and the plurality of transmission resources.

44. The terminal device of claim 43, wherein the first information is the power storage related information, and the plurality of value ranges are a plurality of value ranges corresponding to the power storage related information.

45. The terminal device of claim 43, wherein the first information comprises the power storage related information and the coverage information, each of the power storage related information and the coverage information corresponds to a plurality of value ranges, and the plurality of value range combinations are combinations of the plurality of value ranges corresponding to the power storage related information and the plurality of value ranges corresponding to the coverage information.

46. The terminal device of claim 42, wherein a value of the first information belongs to a first value range among a plurality of value ranges, the first configuration information is used for indicating a mapping relationship between the plurality of value ranges and a plurality of transmission resources, and the first transmission resource is a transmission resource corresponding to the first value range; or
a value of the first information comprises a plurality of values, the plurality of values belong to a first value range combination among a plurality of value range combinations, the first configuration information is used for indicating a mapping relationship between the first value range combination and the plurality of transmission resources, and the first transmission resource is a transmission resource corresponding to the first value range combination.

47. The terminal device of claim 46, wherein
the value of the first information is a value of the power storage related information; or
the plurality of values comprised in the first information are a value of the power storage related information and a value of the coverage information.

48. The terminal device of any one of claims 42 to 47, wherein the first configuration information is configuration information from a network device or pre-configuration information.

49. The terminal device of claim 48, wherein the first configuration information is the configuration information from the network device, and the first configuration information is carried in a system message or Radio Resource Control (RRC) signaling.

50. The terminal device of any one of claims 35 to 49, wherein the one or more transmission resources comprise one or more of the following:
an uplink access resource; and
an uplink data transmission resource.

51. The terminal device of any one of claims 35 to 50, wherein the terminal device is a zero-power terminal.

52. A network device, comprising:
a communication module, configured to transmit first configuration information;
wherein the first configuration information is used for indicating a mapping relationship between one or more transmission resources and first information; and
wherein the first information comprises one or more of the following:
power storage related information of a terminal device; and
coverage information of the terminal device.

53. The network device of claim 52, wherein the power storage related information comprises one or more of the following:
power storage information of the terminal device; and
power information of the terminal device.

54. The network device of claim 53, wherein the power storage information comprises one or more of the following:
a power storage capability of the terminal device; and
power currently stored by the terminal device.

55. The network device of claim 53 or 54, wherein the power information comprises one or more of the following:
maximum transmission power supported by the terminal device;
transmission power currently available to the terminal device;
maximum back scattering power supported by the terminal device; and
back scattering power currently available to the terminal device.

56. The network device of any one of claims 52 to 55, wherein the coverage information comprises one or more of the following:
signal quality of the terminal device in a serving cell; and
location information of the terminal device in the serving cell.

57. The network device of claim 56, wherein
the signal quality of the terminal device in the serving cell comprises a Reference Signal Received Power (RSRP) measurement quantity of the terminal device in the serving cell; and/or
the location information of the terminal device in the serving cell comprises a distance between the terminal device and a cell reference point of the serving cell or a satellite.

58. The network device of any one of claims 52 to 57, wherein
Modulation and Coding Schemes (MCSs) and/or repetitions corresponding to a plurality of transmission resources are different; or
the plurality of transmission resources are represented based on different MCSs and/or repetitions.

59. The network device of any one of claims 52 to 58, wherein the first transmission resource is determined based on the first information and first configuration information, and the first configuration information is used for indicating a mapping relationship between the one or more transmission resources and the first information.

60. The network device of claim 59, wherein
the first information corresponds to a plurality of value ranges, and the first configuration information is used for indicating a mapping relationship between the plurality of value ranges and a plurality of transmission resources; or
the first information corresponds to a plurality of value range combinations, and the first configuration information is used for indicating a mapping relationship between the plurality of value range combinations and the plurality of transmission resources.

61. The network device of claim 60, wherein the first information is the power storage related information, and the plurality of value ranges are a plurality of value ranges corresponding to the power storage related information.

62. The network device of claim 60, wherein the first information comprises the power storage related information and the coverage information, each of the power storage related information and the coverage information corresponds to a plurality of value ranges, and the plurality of value range combinations are combinations of the plurality of value ranges corresponding to the power storage related information and the plurality of value ranges corresponding to the coverage information.

63. The network device of claim 59, wherein a value of the first information belongs to a first value range among a plurality of value ranges, the first configuration information is used for indicating a mapping relationship between the plurality of value ranges and a plurality of transmission resources, and the first transmission resource is a transmission resource corresponding to the first value range; or
a value of the first information comprises a plurality of values, the plurality of values belong to a first value range combination among a plurality of value range combinations, the first configuration information is used for indicating a mapping relationship between the first value range combination and the plurality of transmission resources, and the first transmission resource is a transmission resource corresponding to the first value range combination.

64. The network device of claim 63, wherein
the value of the first information is a value of the power storage related information; or
the plurality of values comprised in the first information are a value of the power storage related information and a value of the coverage information.

65. The network device of any one of claims 59 to 64, wherein the first configuration information is configuration information from a network device or pre-configuration information.

66. The network device of claim 65, wherein the first configuration information is the configuration information from the network device, and the first configuration information is carried in a system message or Radio Resource Control (RRC) signaling.

67. The network device of any one of claims 52 to 66, wherein the one or more transmission resources comprise one or more of the following:
an uplink access resource; and
an uplink data transmission resource.

68. The network device of any one of claims 52 to 67, wherein the terminal device is a zero-power terminal.

69. A terminal device, comprising: a transceiver, a memory and a processor, wherein the memory is configured to store a program, and the processor is configured to call the program stored in the memory and control the transceiver to receive or transmit a signal, to cause the terminal device to perform the method of any one of claims 1 to 17.

70. A network device, comprising: a transceiver, a memory and a processor, wherein the memory is configured to store a program, and the processor is configured to call the program stored in the memory and control the transceiver to receive or transmit a signal, to cause the network device to perform the method of any one of claims 18 to 34.

71. A device, comprising a processor, wherein the processor is configured to call a program from a memory, to cause the device to perform the method of any one of claims 1 to 17 or the method of any one of claims 18 to 34.

72. A chip, comprising a processor, wherein the processor is configured to call a program from a memory, to cause a device installed with the chip to perform the method of any one of claims 1 to 17 or the method of any one of claims 18 to 34.

73. A computer-readable storage medium having stored thereon a program, wherein the program causes a computer to perform the method of any one of claims 1 to 17 or the method of any one of claims 18 to 34.

74. A computer program product comprising a program, wherein the program causes a computer to perform the method of any one of claims 1 to 17 or the method of any one of claims 18 to 34.

75. A computer program, wherein the computer program causes a computer to perform the method of any one of claims 1 to 17 or the method of any one of claims 18 to 34.
